# EUROPÄISCHE PATENTSCHRIFT

(11) **EP 2 527 869 B1**
(45) Veröffentlichungstag und Bekanntmachung des Hinweises auf die Patenterteilung: **07.06.2017**
(21) Anmeldenummer: 12169463.2
(22) Anmeldetag: 25.05.2012
(51) Int. Cl.: G01S 7/523, G01S 15/87, G01S 15/93, H04L 29/00, G01S 15/00

(54) **Sensorvorrichtung für ein Kraftfahrzeug, Kraftfahrzeug und Verfahren zum Betreiben von zumindest zwei Sensoren in einem Kraftfahrzeug**
Sensor device for a motor vehicle, motor vehicle and method for operating at least two sensors in a motor vehicle
Dispositif de capteur pour un véhicule automobile, véhicule automobile et procédé de fonctionnement d'au moins deux capteurs dans un véhicule automobile

(30) Priorität: 26.05.2011 DE 102011102541
(43) Veröffentlichungstag der Anmeldung: 28.11.2012
(73) Patentinhaber: Valeo Schalter und Sensoren GmbH, 74321 Bietigheim-Bissingen (DE)
(72) Erfinder: Hallek, Michael, 71717 Beilstein (DE); Grüdl, Dietmar, 71679 Asperg (DE); Frischmann, Christian, 74343 Sachsenheim (DE); Jung, Thomas, 74074 Heilbronn (DE); Lill, Anton, 74348 Lauffen a. N. (DE)

(56) Entgegenhaltungen:
- EP-A1- 2 182 697
- EP-A2- 1 193 913
- DE-A1-102005 054 390
- DE-A1-102005 056 800

## Beschreibung

Die Erfindung betrifft einen Sensorvorrichtung für ein Kraftfahrzeug, welche mindestens einen ersten Sensor und einen zweiten Sensor aufweist, die jeweils zum Erfassen von Umgebungsinformationen des Kraftfahrzeugs ausgebildet sind, etwa zum Erfassen eines Abstands zu einem fahrzeugexternen Objekt. Die Sensorvorrichtung beinhaltet auch eine Steuereinheit, welche die beiden Sensoren ansteuert. Bei den Sensoren handelt es sich um eine ganz spezifische Kombination von Sensoren: Der erste Sensor ist ein busfähiger Sensor, während der zweite Sensor ein herkömmlicher Sensor ist, welcher unabhängig von einem Bussystem betrieben wird. Die Steuereinheit ist über einen Fahrzeugbus zum Übertragen von Steuerdaten mit dem ersten Sensor sowie über eine von dem Fahrzeugbus verschiedene elektrische (direkte) Signalleitung mit dem zweiten Sensor gekoppelt. Die Erfindung betrifft außerdem ein Kraftfahrzeug mit einer solchen Sensorvorrichtung, wie auch ein Verfahren zum Betreiben von mindestens zwei derartigen Sensoren in einem Kraftfahrzeug.

Vorliegend geht es insbesondere um Ultraschallsensoren, nämlich um eine Kombination aus zumindest einem busfähigen Ultraschallsensors und einem herkömmlichen bzw. busunfähigen Ultraschallsensor. Ultraschallsensoren werden allgemein bei (Ein-)Parkhilfesystemen für Kraftfahrzeuge eingesetzt.

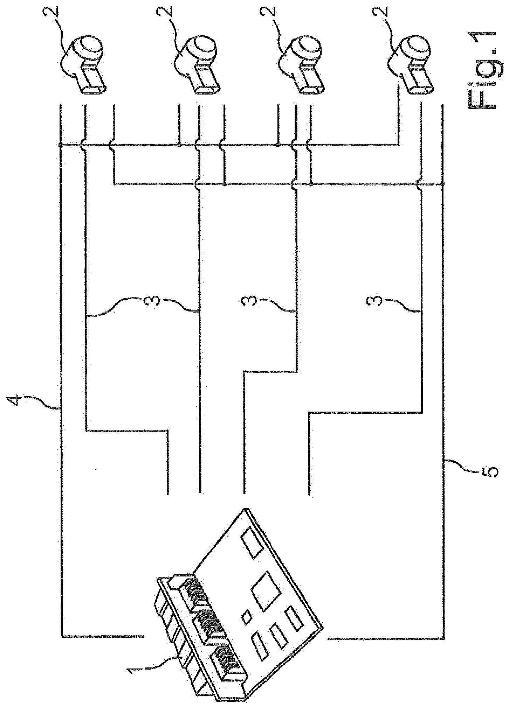

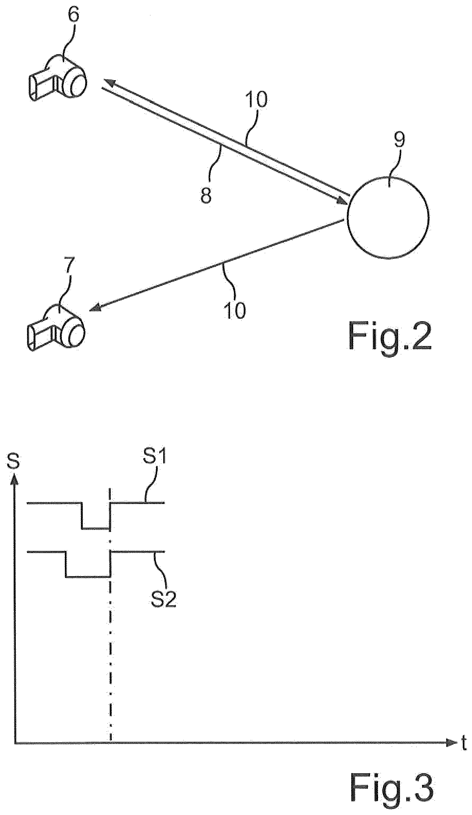

Es sind bereits Parkhilfesysteme bekannt, welche eine Vielzahl von herkömmlichen Ultraschallsensoren beinhalten, welche unabhängig von einem Kommunikationsbus im Kraftfahrzeug betrieben werden. Ein derartiges Parkhilfesystem umfasst eine Steuereinheit (Steuergerät), welche über separate Signalleitungen mit den Ultraschallsensoren elektrisch direkt verbunden ist. Ein derartiges Parkhilfesystem gemäß dem Stand der Technik ist beispielsweise in Fig. 1 dargestellt. Dieses System beinhaltet ein Steuergerät 1, wie auch eine Vielzahl von Ultraschallsensoren 2, die jeweils über eine Signalleitung 3 mit dem Steuergerät 1 elektrisch verbunden sind. Die herkömmlichen Ultraschallsensoren 2 werden über Versorgungsleitungen 4, 5 mit elektrischer Energie versorgt. Zwischen den Versorgungsleitungen 4, 5 liegt dabei eine elektrische Versorgungsspannung an (Gleichspannung); die Versorgungsleitung 4 ist mit einem positiven elektrischen Potential gekoppelt, während an der Versorgungsleitung 5 ein elektrisches Bezugspotential (Masse) bereitgestellt ist. Über die Signalleitungen 3 werden Informationen bzw. Daten zwischen dem Steuergerät 1 einerseits und den jeweiligen Ultraschallsensoren 2 andererseits ausgetauscht. Die Signalleitungen 3 werden nicht nur für die Kommunikation verwendet, sondern dienen auch zur Synchronisierung der angeschlossenen Ultraschallsensoren 2 untereinander, also zum Triggern der Ultraschallsensoren 2. Es wird bei den Messungen im Allgemeinen zwischen so genannten direkten sowie indirekten Messungen (bzw. direkten und indirekten Signalwegen) unterschieden: Bei einem direkten Signalweg sendet ein erster Ultraschallsensor 2 eine Schallwelle aus, welche dann von einem Objekt reflektiert und wiederum von demselben Ultraschallsensor 2 empfangen wird. Bei einem indirekten Signalweg wiederum geht es um eine so genannte Kreuzmessung, bei welcher ein Ultraschallsensor 2 eine Schallwelle aussendet, die von einem Objekt reflektierte Schallwelle jedoch von einem anderen - zum Beispiel benachbarten - Ultraschallsensor 2 empfangen wird. Ein Szenario zur Erläuterung des Unterschieds zwischen einer direkten und einer indirekten Messung ist in Fig. 2 dargestellt. Wie bereits ausgeführt, wird bei einer direkten Messung eine Schallwelle 8 von einem Ultraschallsensor 6 ausgesendet; diese Schallwelle 8 reflektiert dann an einem Objekt 9, und derselbe Ultraschallsensor 6 empfängt dann eine vom Objekt 9 reflektierte Schallwelle 10. Bei einer indirekten Messung wird die vom Objekt 9 reflektierte Schallwelle 10 von einem anderen Ultraschallsensor 7 empfangen.

Bei jeder - sei es direkten oder indirekten - Messung wird die Laufzeit der Schallwelle zwischen einem Sendezeitpunkt und einem Empfangszeitpunkt bestimmt und unter Berücksichtigung der Ausbreitungsgeschwindigkeit des Schalls in eine Entfernung des Objekts vom Kraftfahrzeug umgerechnet. Insbesondere für eine indirekte Messung ist es erforderlich, dass alle beteiligten Sensoren den Sendezeitpunkt kennen bzw. die Ultraschallwellen zu demselben Zeitpunkt aussenden. Dazu müssen die Ultraschallsensoren synchronisiert bzw. gleichzeitig getriggert werden. Dies gelingt mithilfe von Triggersignalen, welche von dem Steuergerät an die Ultraschallsensoren übertragen werden. Wie in Fig. 3 dargestellt ist, werden die Triggersignale S(t) in Form von Impulsen mit jeweils einer vorbestimmten Länge ausgesendet. An jeden Ultraschallsensor 6, 7 (vgl. Fig. 2) wird dabei ein separates Triggersignal S1, S2 übertragen, und zwar jeweils in Form von Impulsen. Die Länge der Impulse gibt an, in welchem Modus der Ultraschallsensor 6, 7 betrieben werden soll, also als Sendesensor und/oder als Empfangssensor. Die steigenden Flanken der Impulse geben den Sendezeitpunkt an und dienen somit zur Synchronisation bzw. Triggerung der beiden Ultraschallsensoren 6, 7. Im Beispiel gemäß Fig. 3 bedeutet das Triggersignal S1 beispielsweise, dass der Ultraschallsensor 6 gemäß Fig. 2 das Schallsignal sowohl senden als auch empfangen soll. Der kürzere Impuls des Triggersignals S2 bedeutet hingegen, dass der Ultraschallsensor 7 lediglich empfangen soll.

Aus dem Stand der Technik sind außerdem busfähige Sensoren bekannt, welche für weitere Funktionalitäten benötigt werden. Solche Sensoren müssen beispielsweise für eine "Totwinkelüberwachung", ein Bremsassistenzsystem, wie auch für ACC-Systeme (Adaptive Cruise Control) und dergleichen eingesetzt werden. Bei diesen Funktionalitäten benötigt man nämlich meistens mehr Informationen als nur die Laufzeit des Schalls. Für die Übertragung dieser Informationen wird in der Regel ein Fahrzeugbus bzw. Datenbus verwendet, wie beispielsweise der CAN-Bus. Auch die Ansteuerung solcher Sensoren basiert hier auf CAN-Botschaften, welche auch zur Synchronisation dienen. Die Synchronisation der Ultraschallsensoren erfolgt also über den Fahrzeugbus.

DE 10 2005 056800 A1 offenbart ein Verfahren zum Betreiben eines Radarsystems insbesondere eines Kraftfahrzeugs, das mindestens ein erstes Sensormodul und mindestens ein weiteres Sensormodul aufweist. Ein Erfassungsbereich des ersten Sensormoduls überlappt zumindest teilweise einen Erfassungsbereich des weiteren Sensormoduls, und das erste Sensormodul empfängt in einem Überwachungsmodus ein von dem weiteren Sensormodul ausgesandtes Sendesignal, um Informationen über den Betriebszustand des weiteren Sensormoduls zu erhalten.

EP 1 193913 A2 beschreibt ein Verfahren und eine Vorrichtung zur Steuerung von Betriebsabläufen, insbesondere bei einem Fahrzeug, wobei wenigstens ein Sensor mit einer Verbindungseinheit über ein Bussystem mit wenigstens einer Steuereinheit zur Steuerung der Betriebsabläufe, welche ebenfalls eine Verbindungseinheit aufweist, verbunden ist und Sensorinformationen zur Steuereinheit übertragen werden. Dabei liest die Steuereinheit die Sensorinformationen zu vorgebbaren Synchronisationspunkten ein und/oder verarbeitet diese. Es wird ein Triggersignal durch die Steuereinheit über das Bussystem an den Sensor derart mit einem Vorhalt übermittelt, dass die Sensorinformationen exakt zum Synchronisationspunkt für die Steuereinheit einlesbar und/oder verarbeitbar vorliegen.

EP 2 182697 A1 offenbart ein Verfahren zur Steuerung von Sensoren, insbesondere für ultraschallbasierende Umfelderkennungssysteme in einem Fahrzeug, bei dem die Sensoren mit einem zentralen Steuergerät über ein Bussystem kommunizieren. Die Sensoren steuern den Messablauf mittels in den Sensoren fest hinterlegter Daten oder mittels in einer Aufdatphase während der Initialisierung des Umfelderkennungssystems jeweils hinterlegter Daten selbstständig, wobei Triggerimpulse zur Triggerung des Messablaufs mit jeweils einem eigenständigen Zeitmesser im jeweiligen Sensor erzeugt werden.

Es ist Aufgabe der Erfindung, eine Lösung aufzuzeigen, wie bei einer Sensorvorrichtung der eingangs genannten Gattung mit zumindest einem busfähigen Sensor und mindestens einem herkömmlichen Sensor eine indirekte Messung (Kreuzmessung) mit den beiden Sensoren ermöglicht werden kann.

Diese Aufgabe wird erfindungsgemäß durch eine Sensorvorrichtung mit den Merkmalen gemäß Patentanspruch 1, wie auch durch ein Kraftfahrzeug mit den Merkmalen gemäß Patentanspruch 9 sowie durch ein Verfahren mit den Merkmalen gemäß Patentanspruch 10 gelöst. Vorteilhafte Ausführungen der Erfindung sind Gegenstand der abhängigen Patentansprüche, der Beschreibung und der Figuren.

Eine erfindungsgemäße Sensorvorrichtung für ein Kraftfahrzeug umfasst mindestens einen ersten Sensor, welcher über einen Fahrzeugbus zum Übertragen von Steuerdaten mit einer Steuereinheit gekoppelt ist, wie auch mindestens einen zweiten Sensor, welcher über eine von dem Fahrzeugbus verschiedene elektrische (direkte) Signalleitung mit der Steuereinheit gekoppelt ist. Die Steuereinheit ist zusätzlich über eine von dem Fahrzeugbus verschiedene elektrische Triggerleitung mit dem ersten Sensor gekoppelt, sodass über die Triggerleitung einerseits und die Signalleitung andererseits Triggersignale an die Sensoren übertragen werden, mit denen die Sensoren miteinander synchronisiert werden.

Erfindungsgemäß ist somit vorgesehen, dass der busfähige (erste) Sensor neben dem Fahrzeugbus auch über eine direkte elektrische Triggerleitung mit der Steuereinheit verbunden ist und über diese Triggerleitung mittels der Steuereinheit getriggert bzw. mit dem zweiten Sensor zeitlich synchronisiert wird. Der Fahrzeugbus dient somit zur Übertragung der Steuerdaten bzw. Informationen an den ersten Sensor, während die Triggerleitung zum Übertragen der Triggersignale und somit zur Triggerung dient. Die Erfindung beruht dabei auf mehreren Erkenntnissen: Sie basiert zunächst auf der Erkenntnis, dass Kosten gespart werden können, wenn busfähige Ultraschallsensoren mit herkömmlichen Ultraschallsensoren kombiniert werden; denn es müssen insgesamt weniger busfähige Ultraschallsensoren eingesetzt werden. Der Erfindung liegt ferner die Erkenntnis zugrunde, dass im Stand der Technik eine indirekte Messung bzw. Kreuzmessung (vgl. Fig. 2) mit einer busfähigen und einem busunfähigen Sensor nicht möglich ist. Eine weitere Erkenntnis besteht darin, dass die indirekte Messung im Stand der Technik deshalb nicht möglich ist, weil die unterschiedlichen Sensoren miteinander nicht synchronisiert werden können, nämlich aufgrund von Verzögerungen in dem Fahrzeugbus. Der Erfindung liegt schließlich die Erkenntnis zugrunde, dass eine indirekte Messung mit zwei unterschiedlichen Sensoren dann durchgeführt werden kann, wenn der busfähige Sensor unter Umgehung des Fahrzeugbusses über eine separate direkte Triggerleitung synchronisiert wird. Die Erfindung verbindet somit die Vorteile eines busfähigen Sensors mit denen eines herkömmlichen Sensors und ermöglicht außerdem eine indirekte Messung bzw. eine Kreuzmessung zwischen dem busfähigen und dem herkömmlichen Sensor. Bei der erfindungsgemäßen Sensorvorrichtung können somit Kosten gespart werden, weil nicht nur teure Sensoren (busfähige Sensoren) verbaut werden müssen, sondern es können auch herkömmliche Sensoren eingesetzt werden. Aufgrund der möglichen Kreuzmessung kann eine bessere Abdeckung des Detektionsbereichs ermöglicht werden, und es findet keine gegenseitige Beeinflussung der beiden Sensoren statt, da die beiden Sensoren synchronisiert werden und ein Messstart innerhalb einer bereits laufenden Messung unterbunden wird.

Mit den beiden Sensoren wird also eine Kreuzmessung ermöglicht: Die Steuereinheit kann die Sensoren zur Detektion eines fahrzeugexternen Objekts derart ansteuern, dass zumindest einer der Sensoren als Sendesensor ein Sendesignal zu einem Sendezeitpunkt aussendet und zumindest der jeweils andere Sensor als Empfangssensor ein von dem Objekt reflektiertes Signal empfängt. Dann wird mit den Triggersignalen der Sendezeitpunkt signalisiert. Die Synchronisation der beiden Sensoren bedeutet hier, dass der Sendezeitpunkt den beiden Sensoren signalisiert wird. Einerseits wird somit ein relativ großer Erfassungsbereich der Sensorvorrichtung abgedeckt; andererseits wird durch die Signalisierung des Sendezeitpunkts erreicht, dass ein Aussenden eines Sendesignals innerhalb einer bereits laufenden Messung unterbunden werden kann. Des Weiteren ist somit der Sendezeitpunkt in den beiden Sensoren bekannt, sodass auch die Laufzeit des Signals auch bei der Kreuzmessung ermittelt werden kann.

An die Sensoren kann die Steuereinheit jeweils einen Impuls als Triggersignal abgeben, und der Sendezeitpunkt kann mit einer Flanke des Impulses signalisiert werden, nämlich insbesondere mit der steigenden Flanke. Diese Ausführungsform kann besonders aufwandsarm und wirkungsvoll implementiert werden, und die beiden Sensoren können ohne viel Aufwand miteinander synchronisiert werden. Es reichen nämlich lediglich ein Impuls für den ersten Sensor sowie ein Impuls für den zweiten Sensor aus, die gleichzeitig an die jeweiligen Sensoren übertragen werden und die beiden Sensoren triggern.

Das über die Signalleitung an den zweiten Sensor (herkömmlichen Sensor) übertragene Triggersignal kann im Wesentlichen zwei unterschiedliche Funktionen aufweisen: einerseits die Funktion der Synchronisation und andererseits auch die Funktion eines Informationsträgers. Dieses Triggersignal kann nämlich eine Information an den zweiten Sensor beinhalten, ob zur Detektion des Objekts der zweite Sensor ein Sendesensor und/oder ein Empfangssensor ist, also ob der zweite Sensor das Sendesignal aussenden soll und/oder das vom Objekt reflektierte Signal empfangen soll. Das Triggersignal ist hier somit ein multifunktionelles Signal, sodass sich die Übertragung weiterer Steuerbefehle an den zweiten Sensor erübrigt. Die genannte Information kann beispielsweise über die Länge und/oder die Höhe des jeweiligen Impulses geliefert werden.

Das über die Triggerleitung an den ersten Sensor übertragene Triggersignal hingegen kann ausschließlich zur Synchronisation dienen. Die Steuerbefehle können an den ersten Sensor nämlich über den Fahrzeugbus übertragen werden. Die über den Fahrzeugbus an den ersten Sensor übertragenen Steuerdaten können also eine Information an den ersten Sensor beinhalten, ob bei der Kreuzmessung der erste Sensor als Sendesensor und/oder als Empfangssensor dienen soll, also ob der erste Sensor das Sendesignal aussenden und/oder das reflektierte Signal empfangen soll. Somit wird der im Kraftfahrzeug ohnehin vorhandene Fahrzeugbus zur Übertragung der Steuerbefehle an den ersten Sensor verwendet, sodass die Triggerleitung entlastet werden kann.

Wenn mit den Triggersignalen der Sendezeitpunkt signalisiert werden soll, so sollte auch gewährleistet werden, dass der erste Sensor seine Funktion bei der Kreuzmessung bereits zum Sendezeitpunkt kennt, also ob er als Sendesensor und/oder als Empfangssensor verwendet wird. Aus diesem Grund ist in einer Ausführungsform vorgesehen, dass die Steuereinheit die Steuerdaten über den Fahrzeugbus an den ersten Sensor zeitlich vor der Übertragung der Triggersignale sendet.

Als Triggerleitung kann eine ohnehin bereits vorhandene elektrische Leitung verwendet werden, nämlich beispielsweise eine Adressierungsleitung und/oder eine Versorgungsleitung. Die Triggerleitung kann nämlich zusätzlich zum Übertragen von Adressdaten zur Adressierung der über den Fahrzeugbus übertragenen Steuerdaten (Adressierung der busfähigen Sensoren) und/oder zur Versorgung des ersten Sensors mit elektrischer Energie verwendet werden. Auf diesem Wege können elektrische Leitungen gespart werden, und es kann eine kostenreduzierte und bauraumsparende Sensorvorrichtung geschaffen werden.

Bevorzugt sind die Sensoren Ultraschallsensoren.

Ein erfindungsgemäßes Kraftfahrzeug beinhaltet eine erfindungsgemäße Sensorvorrichtung oder eine bevorzugte Ausgestaltung davon.

Ein erfindungsgemäßes Verfahren ist zum Betreiben von mindestens zwei Sensoren in einem Kraftfahrzeug ausgelegt, wobei mindestens einer der Sensoren ein busfähiger Sensor und mindestens einer der Sensoren ein herkömmlicher bzw. nicht busfähiger Sensor sind. Es werden Steuerdaten von einer Steuereinheit über einen Fahrzeugbus an einen ersten der Sensoren übertragen, und ein zweiter Sensor wird über eine von dem Fahrzeugbus verschiedene elektrische Signalleitung mittels der Steuereinheit angesteuert. Die Steuereinheit ist zusätzlich über eine vom Fahrzeugbus verschiedene elektrische Triggerleitung mit dem ersten Sensor gekoppelt und überträgt über die Signalleitung einerseits und die Triggerleitung andererseits jeweilige Triggersignale an die Sensoren, mit denen die Sensoren miteinander synchronisiert werden.

Die mit Bezug auf die erfindungsgemäße Sensorvorrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Dabei zeigen:
- Fig. 1: in schematischer Darstellung eine Sensorvorrichtung gemäß dem Stand der Technik;
- Fig. 2: in schematischer Darstellung ein Szenario zur Veranschaulichung des Unterschieds zwischen einer direkten und einer indirekten Messung (Kreuzmessung);
- Fig. 3: einen zeitlichen Verlauf von Triggersignalen gemäß dem Stand der Technik;
- Fig. 4: in schematischer Darstellung eine Sensorvorrichtung für ein Kraftfahrzeug gemäß einer Ausführungsform der Erfindung; und
- Fig. 5: einen zeitlichen Verlauf von Triggersignalen, wobei ein Verfahren gemäß einer Ausführungsform der Erfindung näher erläutert wird.

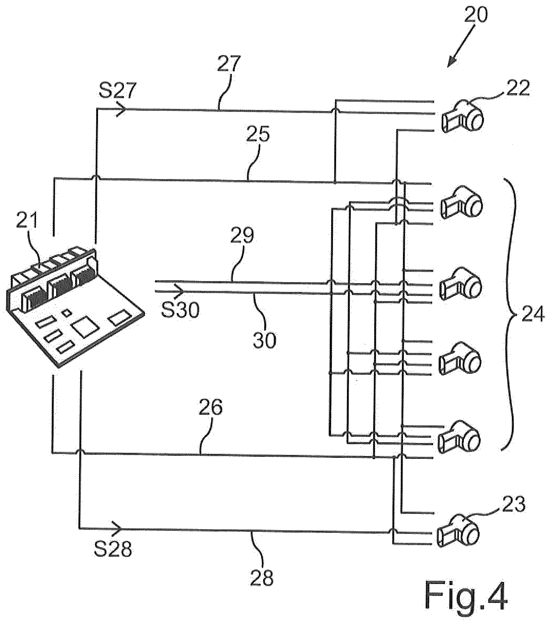

Fig. 4 zeigt in schematischer Darstellung eine Sensorvorrichtung 20 gemäß einer Ausführungsform der Erfindung. Die Sensorvorrichtung 20 umfasst eine Steuereinheit 21, welche ein Steuergerät mit einem digitalen Signalprozessor, einem Mikrocontroller und einem Speicher ist. Die Sensorvorrichtung 20 beinhaltet auch eine Vielzahl von Sensoren, die alle Ultraschallsensoren sind. Und zwar umfasst die Sensorvorrichtung 20 eine Vielzahl von ersten Sensoren 24, welche busfähige Ultraschallsensoren sind. Außerdem beinhaltet die Sensorvorrichtung 20 im Ausführungsbeispiel zwei zweite Sensoren 22, 23, welche herkömmliche und nicht busfähige Ultraschallsensoren sind. Im Ausführungsbeispiel sind insgesamt vier busfähige Ultraschallsensoren 24 bereitgestellt, wobei die Anzahl der zweiten Sensoren 22, 23 sowie die Anzahl der ersten Sensoren 24 je nach Ausführungsform variieren kann. Die Sensoren 22, 23, 24 können beispielsweise an einem Stoßfänger eines Personenkraftwagens angebracht sein.

Alle Sensoren 22, 23, 24 werden über gemeinsame Versorgungsleitungen 25, 26 mit elektrischer Energie versorgt, nämlich von der Steuereinheit 21. Die Versorgungsleitung 25 liegt dabei an einem positiven elektrischen Potential an, während an der Versorgungsleitung 26 ein elektrisches Bezugspotential bereitgestellt ist, also Masse. Zwischen den Versorgungsleitungen 25, 26 liegt somit eine elektrische Versorgungsspannung an, die eine Gleichspannung ist.

Die herkömmlichen Sensoren 22, 23 sind jeweils über eine direkte Signalleitung 27, 28 mit der Steuereinheit 21 elektrisch gekoppelt. Über die Signalleitungen 27, 28 werden die zweiten Sensoren 22, 23 angesteuert, nämlich mittels der Steuereinheit 21. Die Signalleitungen 27, 28 dienen außerdem zur Synchronisation bzw. zum Triggern der zweiten Sensoren 22, 23.

Über die Signalleitungen 27, 28 können somit einerseits Steuerbefehle bzw. Steuerinformationen von der Steuereinheit 21 an die Sensoren 22, 23 sowie andererseits von den Sensoren 22, 23 gewonnene Messwerte an die Steuereinheit 21 übertragen werden.

Die ersten Sensoren 24 sind über einen Fahrzeugbus 29 mit der Steuereinheit 21 verbunden. Der Fahrzeugbus 29 ist beispielsweise der CAN-Bus. Es kann sich hier jedoch um einen beliebigen Kommunikationsbus des Kraftfahrzeugs handeln. Über den Fahrzeugbus 29 können Nachrichten zwischen der Steuereinheit 21 einerseits und den Sensoren 24 andererseits übertragen werden; es erfolgt eine bidirektionale Datenübertragung. Von der Steuereinheit 21 können an die Sensoren 24 beispielsweise Steuerbefehle bzw. Steuerinformationen übertragen werden, während von den Sensoren 24 Messergebnisse bzw. gemessene Umgebungsinformationen an die Steuereinheit 21 übermittelt werden können.

Zusätzlich zu dem Fahrzeugbus 29 ist auch eine elektrische Triggerleitung 30 bereitgestellt, welche die Steuereinheit 21 mit den ersten Sensoren 24 elektrisch verbindet. Alle ersten Sensoren 24 sind somit über die Triggerleitung 30 mit der Steuereinheit 21 elektrisch gekoppelt. Diese direkte elektrische Verbindung hat den Zweck, die ersten Sensoren 24 zu triggern bzw. mit den zweiten Sensoren 22, 23 zu synchronisieren.

Die Triggerleitung 30 hat auch eine zusätzliche Funktion: Sie dient gleichzeitig als eine Adressierungsleitung, über welche die über den Fahrzeugbus 29 an die Sensoren 24 übertragenen Nachrichten adressiert werden. Mit anderen Worten wird über die Triggerleitung 30 auch signalisiert, welcher der Sensoren 24 die übertragenen Nachrichten empfangen soll bzw. für welchen der Sensoren 24 die momentan übertragenen Nachrichten bestimmt sind.

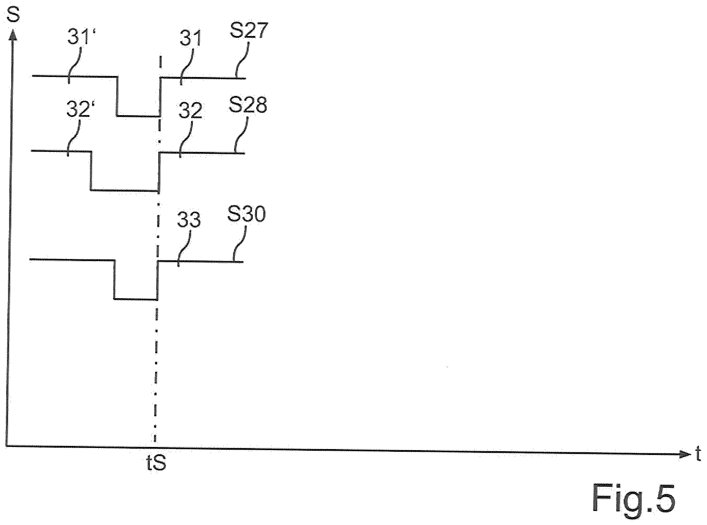

Nun richtet sich das Interesse auf eine so genannte Kreuzmessung, bei welcher zumindest einer der Sensoren 22, 23, 24 ein Sendesignal aussendet und zumindest ein anderer Sensor 22, 23, 24 das von einem Objekt reflektierte Signal empfängt. Eine derartige Kreuzmessung hat den Vorteil, dass ein relativ großer Detektionsbereich bzw. Erfassungsbereich der Sensorvorrichtung 20 gewährleistet ist. Bei der Kreuzmessung müssen die Sensoren 22, 23, 24 jedoch miteinander synchronisiert werden, sodass der Sendezeitpunkt - Zeitpunkt des Aussendens des Sendesignals - allen Sensoren 22, 23, 24 mitgeteilt wird. Ein Verfahren gemäß einer Ausführungsform der Erfindung wird nachfolgend unter Bezugnahme auf Fig. 5 näher erläutert:
In Fig. 5 sind Verläufe von Triggersignalen S über der Zeit t dargestellt, welche über die Signalleitungen 27, 28 sowie über die Triggerleitung 30 übertragen werden. Dargestellt ist ein Triggersignal S27, welches über die Signalleitung 27 an den Sensor 22 übertragen wird, wie auch ein Triggersignal S28, welches über die Signalleitung 28 an den Sensor 23 übertragen wird, sowie ein Triggersignal S30, welches über die Triggerleitung 30 an die busfähigen Sensoren 24 übertragen wird. Bevor das Triggersignal S30 übertragen wird bzw. die Sensoren 24 getriggert werden, werden über den Fahrzeugbus 29 an die Sensoren 24 Nachrichten bzw. Informationen übertragen, weicher der Sensoren 24 bei der nachfolgenden Kreuzmessung als Sendesensor und welcher als Empfangssensor verwendet wird. Jeder der Sensoren 24 erhält somit eine Information, ob er ein Sendesignal aussenden soll und/oder das reflektierte Signal empfangen soll.

Die Triggersignale S27, S28, S30 beinhalten jeweils einen Impuls 31, 32, 33, welcher zur Synchronisation dient. Und zwar werden die Sensoren 22, 23, 24 mit den jeweiligen Impulsen 31, 32, 33 miteinander synchronisiert. Dabei signalisieren die jeweiligen steigenden Flanken der Impulse 31, 32, 33 einen Sendezeitpunkt tS bzw. einen Synchronisationszeitpunkt, zu welchem das Sendesignal ausgesendet werden soll. Die steigenden Flanken der Impulse 31, 32, 33 fallen also alle zusammen, und zwar zu dem Sendezeitpunkt tS. Jeder Sensor 22, 23, 24 weiß somit, wann das Sendesignal von dem Sendesensor ausgesendet wird.

Während das Triggersignal S30 lediglich die Funktion der Synchronisation besitzt, weisen die anderen Triggersignale S27 und S28 auch eine zusätzliche Funktion auf: Mit den Triggersignalen S27, S28 werden auch Informationen an die Sensoren 22, 23 übertragen, sodass die Sensoren 22, 23 darüber informiert werden, ob sie bei der Kreuzmessung das Sendesignal aussenden und/oder das reflektierte Signal empfangen sollen. Diese Information wird mit dem jeweils vorhergehenden Impuls 31', 32' übermittelt. Dabei wird die Länge des jeweiligen Impulses 31', 32' variiert. Im Ausführungsbeispiel gemäß Fig. 5 dient der Sensor 22 beispielsweise sowohl als Sendesensor als auch als Empfangssensor, während der Sensor 23 lediglich als Empfangssensor dient.

## Patentansprüche

1. Sensorvorrichtung (20) für ein Kraftfahrzeug, mit mindestens einem ersten Sensor (24) und einem zweiten Sensor (22, 23) jeweils zum Erfassen von Umgebungsinformationen des Kraftfahrzeugs, und mit einer Steuereinheit (21) zum Ansteuern der Sensoren (22, 23, 24), welche über einen Fahrzeugbus (29) zum Übertragen von Steuerdaten mit dem ersten Sensor (24) sowie über eine von dem Fahrzeugbus (29) verschiedene elektrische Signalleitung (27, 28) mit dem zweiten Sensor (22, 23) gekoppelt ist,
**dadurch gekennzeichnet, dass**
die Steuereinheit (21) zusätzlich über eine von dem Fahrzeugbus (29) verschiedene elektrische Triggerleitung (30) mit dem ersten Sensor (24) gekoppelt ist und dazu ausgebildet ist, über die elektrische Signalleitung (27, 28) einerseits und die elektrische Triggerleitung (30) andererseits jeweilige Triggersignale (S27, S28, S30) an die Sensoren (22, 23, 24) zu übertragen, mit denen die Sensoren (22, 23, 24) miteinander synchronisiert werden.

2. Sensorvorrichtung (20) nach Anspruch 1,
**dadurch gekennzeichnet, dass**
die Steuereinheit (21) dazu ausgelegt ist, die Sensoren (22, 23, 24) zur Detektion eines fahrzeugexternen Objektes (9) derart anzusteuern, dass zumindest einer der Sensoren (22, 23, 24) als Sendesensor ein Sendesignal zu einem Sendezeitpunkt (tS) aussendet und zumindest der jeweils andere Sensor (22, 23, 24) als Empfangssensor ein von dem Objekt (9) reflektiertes Signal empfängt, wobei mit den Triggersignalen (S27, S28, S30) der Sendezeitpunkt (tS) den Sensoren (22, 23, 24) signalisiert wird.

3. Sensorvorrichtung (20) nach Anspruch 2,
**dadurch gekennzeichnet, dass**
die Steuereinheit (21) dazu ausgelegt ist, jeweils einen Impuls (31, 32, 33) als Triggersignal (S27, S28, S30) an die Sensoren (22, 23, 24) abzugeben, wobei der Sendezeitpunkt (tS) mit einer, insbesondere steigenden, Flanke des Impulses (31, 32, 33) den Sensoren (22, 23, 24) signalisiert wird.

4. Sensorvorrichtung (20) nach Anspruch 2 oder 3,
**dadurch gekennzeichnet, dass**
das über die elektrische Signalleitung (27, 28) an den zweiten Sensor (22, 23) übertragene Triggersignal (S27, S28) eine Information an den zweiten Sensor (22, 23) beinhaltet, ob zur Detektion des Objektes (9) der zweite Sensor (22, 23) ein Sendesensor und/oder ein Empfangssensor ist.

5. Sensorvorrichtung (20) nach einem der Ansprüche 2 bis 4,
**dadurch gekennzeichnet, dass**
die über den Fahrzeugbus (29) an den ersten Sensor (24) übertragenen Steuerdaten eine Information an den ersten Sensor (24) beinhalten, ob zur Detektion des Objektes (9) der erste Sensor (24) ein Sendesensor und/oder ein Empfangssensor ist.

6. Sensorvorrichtung (20) nach einem der vorhergehenden Ansprüche,
**dadurch gekennzeichnet, dass**
die Steuereinheit (21) dazu ausgelegt ist, zeitlich vor der Übertragung der Triggersignale (S27, S28, S30) die Steuerdaten über den Fahrzeugbus (29) an den ersten Sensor (24) zu übertragen.

7. Sensorvorrichtung (20) nach einem der vorhergehenden Ansprüche,
**dadurch gekennzeichnet, dass**
die elektrische Triggerleitung (30) zusätzlich zum Übertragen von Adressdaten zur Adressierung der über den Fahrzeugbus (29) übertragenen Steuerdaten und/oder zur Versorgung des ersten Sensors (24) mit elektrischer Energie verwendet ist.

8. Sensorvorrichtung (20) nach einem der vorhergehenden Ansprüche,
**dadurch gekennzeichnet, dass**
die Sensoren (22, 23, 24) Ultraschallsensoren sind.

9. Kraftfahrzeug mit einer Sensorvorrichtung (20) nach einem der vorhergehenden Ansprüche.

10. Verfahren zum Betreiben von mindestens zwei Sensoren (22, 23, 24) in einem Kraftfahrzeug, jeweils zum Erfassen von Umgebungsinformationen des Kraftfahrzeugs, durch:
- Übertragen von Steuerdaten von einer Steuereinheit (21) über einen Fahrzeugbus (29) an einen ersten Sensor (24) und
- Ansteuern eines zweiten Sensors (22, 23) über eine von dem Fahrzeugbus (29) verschiedene elektrische Signalleitung (27, 28) mittels der Steuereinheit (21),
**dadurch gekennzeichnet, dass**
die Steuereinheit (21) zusätzlich über eine von dem Fahrzeugbus (29) verschiedene elektrische Triggerleitung (30) mit dem ersten Sensor (24) gekoppelt ist und über die elektrische Signalleitung (27, 28) einerseits und die elektrische Triggerleitung (30) andererseits jeweilige Triggersignale (S27, S28, S30) an die Sensoren (22, 23, 24) überträgt, mit denen die Sensoren (22, 23, 24) miteinander synchronisiert werden.

## Claims

1. Sensor device (20) for a motor vehicle, having at least one first sensor (24) and one second sensor (22, 23) each for acquiring environmental information relating to the motor vehicle, and having a control unit (21) for controlling the sensors (22, 23, 24), which control unit is coupled to the first sensor (24) via a vehicle bus (29) for transmitting control data and is coupled to the second sensor (22, 23) via an electrical signal line (27, 28) which is different from the vehicle bus (29),
**characterized in that**
the control unit (21) is additionally coupled to the first sensor (24) via an electrical trigger line (30) different from the vehicle bus (29) and is configured to transmit respective trigger signals (S27, S28, S30) to the sensors (22, 23, 24) via the electrical signal line (27, 28), on the one hand, and the electrical trigger line (30), on the other hand, by means of which signals the sensors (22, 23, 24) are synchronized with one another.

2. Sensor device (20) according to Claim 1, **characterized in that**
the control unit (21) is designed, for the purpose of detecting an object (9) outside the vehicle, to control the sensors (22, 23, 24) in such a manner that at least one of the sensors (22, 23, 24), as a transmitting sensor, emits a transmission signal at a transmission time (tS) and at least the respective other sensor (22, 23, 24), as a receiving sensor, receives a signal reflected by the object (9), the trigger signals (S27, S28, S30) being used to signal the transmission time (tS) to the sensors (22, 23, 24).

3. Sensor device (20) according to Claim 2, **characterized in that**
the control unit (21) is designed to respectively output a pulse (31, 32, 33) as the trigger signal (S27, S28, S30) to the sensors (22, 23, 24), the transmission time (tS) being signalled to the sensors (22, 23, 24) with an edge, in particular a rising edge, of the pulse (31, 32, 33).

4. Sensor device (20) according to Claim 2 or 3, **characterized in that**
the trigger signal (S27, S28) transmitted to the second sensor (22, 23) via the electrical signal line (27, 28) contains an item of information for the second sensor (22, 23) relating to whether the second sensor (22, 23) is a transmitting sensor and/or a receiving sensor for the purpose of detecting the object (9).

5. Sensor device (20) according to one of Claims 2 to 4,
**characterized in that**
the control data transmitted to the first sensor (24) via the vehicle bus (29) contain an item of information for the first sensor (24) relating to whether the first sensor (24) is a transmitting sensor and/or a receiving sensor for the purpose of detecting the object (9).

6. Sensor device (20) according to one of the preceding claims,
**characterized in that**
the control unit (21) is designed to transmit the control data to the first sensor (24) via the vehicle bus (29) temporally before transmitting the trigger signals (S27, S28, S30).

7. Sensor device (20) according to one of the preceding claims,
**characterized in that**
the electrical trigger line (30) is additionally used to transmit address data for addressing the control data transmitted via the vehicle bus (29) and/or to supply the first sensor (24) with electrical energy.

8. Sensor device (20) according to one of the preceding claims,
**characterized in that**
the sensors (22, 23, 24) are ultrasonic sensors.

9. Motor vehicle having a sensor device (20) according to one of the preceding claims.

10. Method for operating at least two sensors (22, 23, 24) in a motor vehicle, each for acquiring environmental information relating to the motor vehicle, by:
- transmitting control data from a control unit (21) to a first sensor (24) via a vehicle bus (29) and
- controlling a second sensor (22, 23) by means of the control unit (21) via an electrical signal line (27, 28) which is different from the vehicle bus (29),
**characterized in that**
the control unit (21) is additionally coupled to the first sensor (24) via an electrical trigger line (30) different from the vehicle bus (29) and transmits respective trigger signals (S27, S28, S30) to the sensors (22, 23, 24) via the electrical signal line (27, 28) on the one hand, and the electrical trigger line (30), on the other hand, by means of which signals the sensors (22, 23, 24) are synchronized with one another.

## Revendications

1. Dispositif à capteurs (20) pour un véhicule automobile, comportant au moins un premier capteur (24) et un deuxième capteur (22, 23) respectivement destinés à détecter des informations d'environnement du véhicule automobile, et comportant une unité de commande (21) destinée à commander les capteurs (22, 23, 24), qui est couplée au premier capteur (24) par l'intermédiaire d'un bus de véhicule (29) pour transmettre des données de commande et au deuxième capteur (22, 23) par l'intermédiaire d'une ligne de signal (27, 28) électrique différente du bus de véhicule (29), **caractérisé en ce que**
l'unité de commande (21) est en outre couplée au premier capteur (24) par l'intermédiaire d'une ligne de déclenchement (30) électrique différente du bus de véhicule (29) et est formée pour transmettre aux capteurs (22, 23, 24) des signaux de déclenchement (S27, S28, S30) respectifs par l'intermédiaire de la ligne de signal (27, 28) électrique, d'une part, et par l'intermédiaire de la ligne de déclenchement (30) électrique, d'autre part, au moyen desquelles les capteurs (22, 23, 24) sont synchronisés entre eux.

2. Dispositif à capteurs (20) selon la revendication 1,
**caractérisé en ce que** l'unité de commande (21) est conçue pour commander les capteurs (22, 23, 24) à des fins de détection d'un objet (9) extérieur au véhicule de manière à ce qu'au moins l'un des capteurs (22, 23, 24), en tant que capteur d'émission, émette un signal d'émission à un instant d'émission (tS) et à ce qu'au moins l'autre capteur respectif (22, 23, 24), en tant que capteur de réception, reçoive un signal réfléchi par l'objet (9), dans lequel l'instant d'émission (tS) est signalé aux capteurs (22, 23, 24) au moyen des signaux de déclenchement (S27, S28, S30).

3. Dispositif à capteurs (20) selon la revendication 2,
**caractérisé en ce que** l'unité de commande (21) est conçue pour délivrer respectivement aux capteurs (22, 23, 24) une impulsion (31, 32, 33) en tant que signal de déclenchement (S27, S28, S30), dans lequel l'instant d'émission (tS) est signalé aux capteurs (22, 23, 24) au moyen d'un front, notamment montant, de l'impulsion (31, 32, 33).

4. Dispositif à capteurs (20) selon la revendication 2 ou 3,
**caractérisé en ce que** le signal de déclenchement (S27, S28) transmis au deuxième capteur (22, 23) par l'intermédiaire de la ligne de signal électrique (27, 28) contient une information concernant le deuxième capteur (22, 23) indiquant si le deuxième capteur (22, 23) est un capteur d'émission et/ou un capteur de réception pour la détection de l'objet (9).

5. Dispositif à capteurs (20) selon l'une quelconque des revendications 2 à 4,
**caractérisé en ce que** les données de commande transmises au premier capteur (24) par l'intermédiaire du bus de véhicule (29) contiennent une information concernant le premier capteur (24) indiquant si le premier capteur (24) est un capteur d'émission et/ou un capteur de réception pour la détection de l'objet (9).

6. Dispositif à capteurs (20) selon l'une quelconque des revendications précédentes,
**caractérisé en ce que** l'unité de commande (21) est conçue pour transmettre au premier capteur (24) les données de commande par l'intermédiaire du bus de véhicule (29) à un instant précédant la transmission des signaux de déclenchement (S27, S28, S30).

7. Dispositif à capteurs (20) selon l'une quelconque des revendication précédentes,
**caractérisé en ce que**
la ligne de déclenchement (30) électrique est en outre utilisée pour transmettre les données d'adresse pour adresser les données de commande transmises par l'intermédiaire du bus de véhicule (29) et/ou pour alimenter le premier capteur (24) en énergie électrique.

8. Dispositif à capteurs (20) selon l'une quelconque des revendications précédentes,
**caractérisé en ce que** les capteurs (22, 23, 24) sont des capteurs à ultrasons.

9. Véhicule automobile comportant un dispositif à capteurs (20) selon l'une quelconque des revendications précédentes.

10. Procédé de mise en fonctionnement d'au moins deux capteurs (22, 23, 24) dans un véhicule automobile, chacun des capteurs étant destiné à détecter des informations d'environnement du véhicule automobile, consistant à :
- transmettre des données de commande par l'intermédiaire d'un bus de véhicule (29) d'une unité de commande (21) à un premier capteur (24) et
- commander un deuxième capteur (22, 23) par l'intermédiaire d'une ligne de signal (27, 28) électrique différente du bus de véhicule (29) au moyen de l'unité de commande (21),
**caractérisé en ce que**
l'unité de commande (21) est en outre couplée au premier capteur (24) par l'intermédiaire d'une ligne de déclenchement (30) électrique différente du bus de véhicule (29) et transmet aux capteurs (22, 23, 24) des signaux de déclenchement (S27, S28, S30) respectifs par l'intermédiaire de la ligne de signal (27, 28) électrique, d'une part, et par l'intermédiaire de la ligne de déclenchement (30) électrique, d'autre part, au moyen desquelles les capteurs (22, 23, 24) sont synchronisés entre eux.
